# EUROPEAN PATENT APPLICATION

(11) **EP 4 477 635 A1**
(43) Date of publication of application: **18.12.2024**
(21) Application number: 24181538.0
(22) Date of filing: 11.06.2024
(51) Int. Cl.: C04B 40/00

(54) **PHOTOCATALYTIC ADDITIVE FOR THE MANUFACTURING OF KITCHEN AND BATHROOM FURNISHING PRODUCTS**

(30) Priority: 15.06.2023 IT 202300012255
(71) Applicant: DELTA SRL, 62010 Montecassiano (MC) (IT)
(72) Inventor: BUGIOLACCHIO, Antonio, 62019 Recanati (MC) (IT); ROSSINI, Samuele, 60022 Castelfidardo (AN) (IT); PIANESI, Maria Savina, 62100 Macerata (IT)
(74) Representative: Cutropia, Gianluigi

(57) **Abstract**

A photocatalytic additive for the manufacturing of kitchen and bathroom furnishing products, comprising: a fluorinated component comprising an acrylic monomer with alkyl group having fluorine atoms; and a photocatalytic component comprising titanium dioxide (TiO₂ ).

## Description

The present invention relates to a photocatalytic additive for the manufacturing of kitchen and bathroom furnishing products, such as sinks, washbasins, countertops, bathtubs, shower trays, and sheets obtained by molding. Such a photocatalytic additive is suitable for being added in mass to a dispersion of acrylic resin and/or polyester and mineral charges to obtain a composite product for use in kitchen and bathroom furnishings.

Generally speaking, a kitchen sink is made with a composition comprising mineral charges and a resin that ensures the cohesion of the mineral charges.

Said compositions may comprise a photocatalytic component, such as titanium dioxide (TiO₂), tungsten trioxide (WOs), zinc oxide (ZnO), cerium dioxide (CeO₂), zirconium dioxide (ZrO₂), and tin dioxide (SnO₂), which are used to obtain a self-cleaning photoactive surface of the molded product.

WO2013/017851A1, in the name of the same applicant, discloses a kitchen sink composition comprising mineral charges (quartz), an acrylic syrup resin, comprising a monomer (methyl methacrylate (MMA)) and polymer (poly-methyl methacrylate (PMMA)), and titanium dioxide (TiO₂).

WO2016/177662A1, in the name of the same applicant, describes a kitchen sink composition comprising aluminum trihydrate (ATH) mineral charges, a polyester resin, and titanium dioxide (TiO₂).

Obviously, for such products to have an efficient and long-lasting photocatalytic effect, the titanium dioxide must be present on the surface and must be strongly bonded with the resin.

ZHANG JINXIA ET AL: "A novel composite paint (TiO2/fluorinated acrylic nanocomposite) for antifouling application in marine environments," JOURNAL OF ENVIRONMENTAL CHEMICAL ENGINEERING, vol. 4, no. 2, June 1, 2016 (2016-06-01) - 6 December 2023 (2023-12-06), pages 2545-2555, discloses a composition containing a fluorinated acrylic nanocomposite and Titanium dioxide (TiO₂). Such a composition is suitable for being used to coat hulls and other structures that are subject to biofouling. The term "biofouling" is a contraction of biological fouling and refers to the unwanted accumulation of microorganisms, plants, algae and animals on structures that emerge from the water, such as ships. Such a composition is obtained by adding fluorinated acrylic resin and a hardening agent in a reaction system so as to acquire a fluorinated acrylate mixture. Then, a suspension of Titanium dioxide nanoparticles (TiO₂) is dispersed in the mixture. Such Titanium dioxide (TiO₂) is not a doped Titanium dioxide, i.e., a Titanium dioxide (TiO₂) subject to doping. Therefore, such Titanium dioxide can only be activated with ultraviolet A (UV-A) radiation.

JPH10212388 describes a resin having a photocatalytic function comprising a fluoro alkyl methacrylate polymer, polydimethylsiloxane, polyester, and Titanium dioxide (TiO₂). The titanium dioxide (TiO₂) is not a doped Titanium dioxide, that is a Titanium dioxide (TiO₂) subject to doping. Therefore, also in such a case, the Titanium dioxide can only be activated with ultraviolet A (UV-A) radiation.

The purpose of the present invention is to eliminate the drawbacks of the prior art by providing a photocatalytic additive capable of providing a photocatalytic action in the molded product that can be activated with both ultraviolet A (UV-A) radiation and visible light.

An additional purpose of the present invention is to provide such a photocatalytic additive that is capable of favoring a bactericidal function in the molded product.

A further purpose of the present invention is to provide such a photocatalytic additive that is capable of effectively reducing pollutants in liquid and gaseous phase.

A further purpose of the present invention is to provide such a photocatalytic additive that is capable of increasing its presence on the surface of the molded product, thus reducing the amount of photocatalyst used.

A further purpose of the present invention is to provide such a photocatalytic additive that is versatile and easy to make and use.

These purposes are achieved in accordance with the invention with the features of the attached independent claims.

Advantageous realizations of the invention appear from the dependent claims.

The photocatalytic additive according to the invention comprises:
- a fluorinated component comprising an acrylic monomer with alkyl group having fluorine atoms; and
- a photocatalytic component comprising Titanium dioxide (TiO₂) that is doped and photoactive even in visible light.

The acrylic monomer can be a methacrylic acid ester. The photocatalytic component may be photocatalytic titanium dioxide, which is active in visible light and is pretreated with silane (i.e., silanized photocatalytic titanium dioxide).

The production process of the photocatalytic additive provides for a formation of a covalent bond between the pretreated (silanized) titanium dioxide and the fluorinated monomer during a partial radical polymerization.

The titanium dioxide is pretreated by means of a silanization process, using an organo-functionalized silane that acts as *coupling agent* and is capable of bonding the organic component, i.e., the fluorinated polymer, and the inorganic component, i.e., the titanium dioxide.

The additive thus obtained can be used in dispersions comprising acrylic syrup and/or polyester and mineral charges, such as quartz or silica, glass microspheres, wollastonite or other silicates, aluminum oxides, feldspar, calcium carbonate, aluminum trihydrate, etc.

Unlike the ordinary photocatalytic coatings, in the final composite material obtained with the addition of the additive according to the invention, the titanium dioxide is embedded into the polymer matrix; however, the use of the fluorinated polymer determines a surface migration of the titanium dioxide and thus the presence of the photocatalyst predominantly on the surface of the material.

The photocatalytic activity of the final composite material was measured with photoactivity tests based on the degradation of pollutants in the liquid and gaseous phase: methylene blue degradation in aqueous solution with UV light and NOx abatement in gaseous phase with UV light and visible light, with a positive result in both cases.

In addition, we measured the bactericidal power against various bacteria (*Escherichia coli, beta glucuronidase positive, Salmonellae, coagulase-positive Staphylococci,* ...) of the composite material in which the photocatalytic additive according to the invention was used, with a positive result also in such a case.

Additional features of the invention will appear clearer from the following detailed description, which refers to a purely illustrative and therefore non-limiting embodiment, illustrated in the accompanying drawings, wherein:
Fig. 1 illustrates a structure formula of 3-methacryloxypropryltrimethoxysilane (MAPTMS);
Fig. 2 illustrates structure formulas in a silanization reaction of the TiO₂ with MAPTMS;
Fig. 3 illustrates a structure formula of the 2,2,2-Trifluoethylmethacrylate (TFEMA);
Fig. 4 illustrates structure formulas in an activation process of a BCHPC radical initiator by means of heat and formation of the radical in the fluorinated monomer TFEMA;
Fig. 5 illustrates structure formulas in a propagation scheme of the fluorinated monomer radical (TFEMA) that can react with itself and with the silanized TiO₂;
Fig. 6 illustrates a structure formula of a possible structure of the fluorinated polymer chain covalently bonded to the TiO₂ after termination;
Fig. 7 is a diagrammatic view illustrating the structure formulas of fluorinated syrup with titanium dioxide according to the invention;
Fig. 8 is a measurement diagram used for a degradation test according to ISO 10678:2010;
Fig. 9 is a graph of the absorbance-time measurement curves for the samples having the additives S5-S9 at different percentages;
Fig. 10 is a measurement diagram used for a degradation test according to ISO 10678:2010;
Fig. 11 is a graph of the absorbance-time measurement curves on the DQD Black Matt sink having 0.5% of doped TiO₂ (additive S6);
Fig. 12 is a graph of the trend of residual NOx concentration with respect to time, using visible light;
Fig. 13 illustrates a table and a graph with the result of the antibacterial activity measurement on the DQD Black Matt sample with 0.5% of doped TiO₂ (additive S6);
Fig. 14 is a table showing the result of the antibacterial activity measurement on the DQD Black Matt sample with 0.5% of doped TiO₂ (additive S6);
Fig. 15 is a table showing the result of the antibacterial activity measurement on the DQD Black Matt sample with 1% of doped TiO₂ (S6 additive);
Fig. 16 is an SEM image on the surface of a composite material obtained with the photocatalytic additive according to the invention;
Fig. 17 is a list of elements identified by an X-ray microanalysis and present on the *show face* of the composite material with the photocatalytic additive according to the invention;
Fig. 18 is a graph illustrating the EDS spectrum of the elements in Fig. 17;
Fig. 19 is an SEM image on a section of the composite material obtained with the photocatalytic additive according to the invention;
Fig. 20 is a list of elements identified by an X-ray microanalysis and present on the section of the composite material with the photocatalytic additive according to the invention; and
Fig. 21 is a graph illustrating the EDS spectrum of the elements in Fig. 20.

The photocatalytic additive according to the invention comprises:
- a fluorinated component comprising an acrylic monomer with alkyl group having fluorine atoms; and
- a photocatalytic component comprising Titanium dioxide (TiO₂) that is subject to doping and is photoactive even in visible light.

The photocatalytic component can be nanometer titanium dioxide (TiO₂ ), particularly the anatase crystalline form that is commonly used in photocatalytic processes. In photocatalysis, an electromagnetic radiation at an appropriate wavelength is used to activate the photocatalysts, which are commonly semiconductors, such as TiO₂. The process generates highly reactive species known as ROS (*Reactive Oxygen Species*) that can decompose microorganisms or organic and inorganic substances that are found in water or air through oxidative stress.

The activation energy depends on the *band gap* of the semiconductor and is 3.2eV for TiO₂ anatase. In view of the above, the wavelength required to activate the photocatalyst must be lower than 390nm and, therefore, at least the UV-A portion of the electromagnetic spectrum is necessary.

However, the photoactivity of the titanium dioxide can be extended to wavelengths in the visible region through processes such as doping or the development of systems with two or more semiconductors.

For such a reason, a commercially available type of nanometer titanium dioxide was identified, which can be activated by visible light radiation. This results in a significant improvement in the quality of the final product, since only a small portion of sunlight has sufficient energy to activate the normal TiO₂. So, a specially processed nanometer titanium dioxide was identified to achieve high photocatalytic performance, which is active in both visible and ultraviolet light.

Specifically, such a treatment provides for doping the titanium dioxide with 1% to 10% of a transition metal with electronegativity between 1.4 and 2, in such a way to obtain a doped titanium dioxide (TiO₂).

Advantageously, the transition metal is Manganese in a percentage of 1 %-1 0%, or Silver in a percentage of 2%.

In addition to the innovation given by the use of the new treated titanium dioxide, there is an innovation in the preparation and incorporation procedure of the titanium dioxide into the acrylic dispersion.

The additive according to the invention is obtained by means of the partial radical polymerization of the fluorinated methacrylic monomer in the presence of titanium dioxide pretreated with silane.

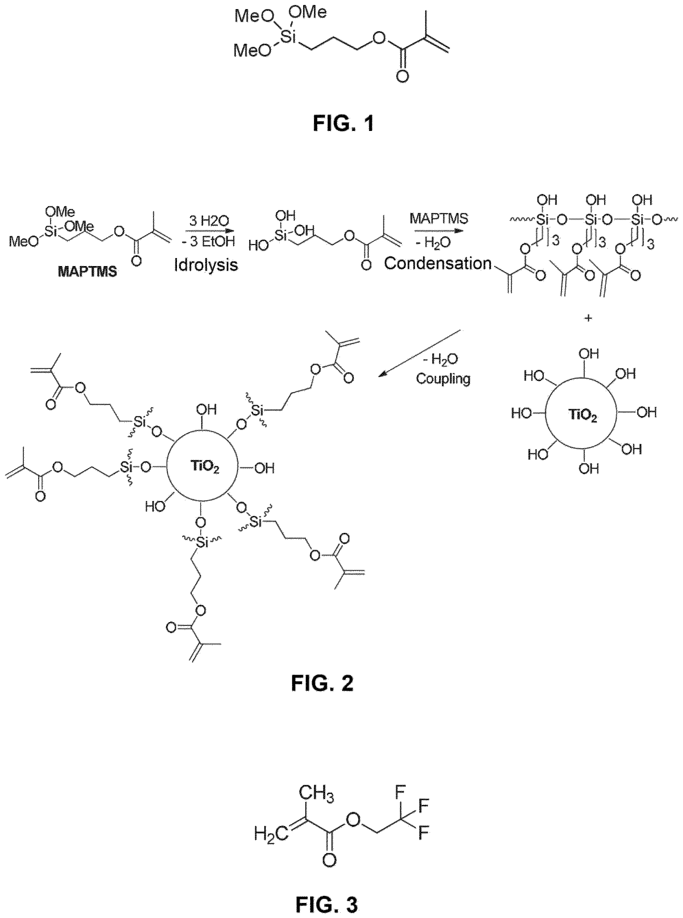

The TiO₂ is pretreated by means of a silanization process, using 3-methacryloxypropryltrimethoxysilane (MAPTMS) as organo-functionalized silane, whose molecular chemical formula is shown in Fig. 1.

Organo-functionalized silanes have a silicon atom as central unit, which is combined with two different groups:
i) organo-functional group: selected to interact with the organic component and covalently bonded to the silicon atom through a carbon atom *spacer;*
ii) silico-functional or hydrolyzable group: groups (usually alkoxides) directly bonded to the silicon unit and which, after their hydrolysis, can react with the active centers of inorganic substrates.

The silanization of TiO₂ with 3-methacryloxypropyltrimethoxysilane (MAPTMS) is used to compatibilize this inorganic material with a methacrylic or acrylic-based polymer matrix. However, the silanization process of TiO₂ is also possible with silanes with a different organo-functionality. In fact, silanes can be used in different resins such as polyester.

The additive is mainly composed of the fluorinated polymer bound to the surface of the doped TiO₂ obtained *in situ* by means of a partial radical polymerization and of the previous silanization of the TiO₂ dispersed in the fluorinated monomer.

The additive comprises titanium dioxide in a weight percentage greater than 15% and lower than 50% of the total weight of the additive; preferably, the additive comprises titanium dioxide in a weight percentage between 15% and 40% of the total weight of the additive.

The silanization process of the TiO₂ occurs by means of the reaction of the silico-functional groups with the -OH groups of the oxide

Fig. 2 illustrates a possible silanization mechanism of the TiO₂ which can be divided into three different steps:
- hydrolysis of the silico-functional groups to silanol groups;
- coupling of the silanol groups with the titanium dioxide; and
- condensation between silanol groups to polysiloxane.

The organo-functionality of the silanization process allows for further transformations in the titanium dioxide. In particular, the C-C carbon-carbon double bond of the methacrylic function can react with acrylic or styrenic compounds or with other monomers having the C-C carbon-carbon double bond by means of radical polymerization.

Such a silanization reaction was used both to better disperse the titanium dioxide nanoparticles in solvents or organic resins, but more importantly to covalently bond the TiO₂ to a methacrylic or acrylic monomer by means of the growth of an oligo/polymer chain starting from the methacrylic function of the silane found on the surface of the TiO₂.

The methacrylic monomer used was 2,2,2-trifluoroethyl methacrylate (TFEMA), but methacrylic acid and its esters or other fluorinated vinyl monomers can also be used

With reference to Fig. 3, which illustrates the molecular chemical formula of the TFEMA, the use of a monomer with fluorine atoms, such as TFEMA, is due to the fact that a fluorinated component on the polymer chain directly bonded to the titanium dioxide is to be obtained.

Recently, fluoropolymers have attracted considerable interest as surface-modifying agents due to their low surface energy. Polymers with fluorine have the ability to migrate to the air-solid interface and spontaneously self-assemble with its fluorine atoms. It is plausible that such a phenomenon is largely related to the migration of the fluorine atoms toward the air-solid interface, resulting in a gradient distribution of the fluorine atoms along the *cross section* of the polymer matrix.

So, the goal is to create a strong chemical bond between the titanium dioxide and the fluorinated methacrylic component by means of the partial free radical polymerization. The fluorinated monomer syrup in the presence of pre-silanized titanium dioxide is formed according to the ordinary radical reactions with initiation, propagation and finally termination.

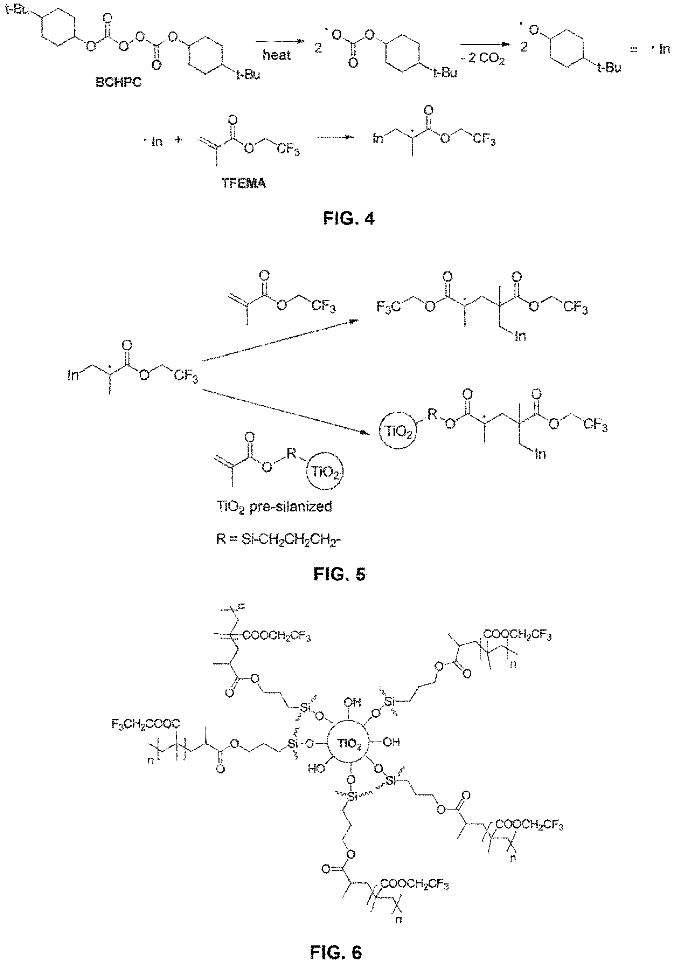

The initiation, propagation and termination reactions are illustrated in Figs. 4, 5 and 6, respectively.

With reference to Fig. 4, peroxides and azo compounds can be used as radical initiator. The initiator allows a radical to be created in the acrylic monomer, which can react with other monomer units.

With reference to Fig. 5, the radical generated during the initiation step reacts with other monomers, initiating the propagation step. Specifically, the radical can interact either with another TFEMA monomer or with the monomer unit directly bound to the TiO₂ (introduced by the silanization reaction).

With reference to Fig. 6, a fluorinated polymer directly bonded to the titanium dioxide is obtained after termination.

So, in the present photocatalytic additive, a fluorinated polymer is anchored on the surface of the titanium dioxide with an approach known as grafting-from approach in which a monomeric unit immobilized on the surface of the TiO₂ (i.e., the MAPTMS silane) is exploited to grow a (fluorinated) polymer through *in situ* radical polymerization.

The additive thus formed can be used in compositions comprising mineral charges and polymerizable resins to obtain a composite material (for bathroom or kitchen furnishings). The result obtained in the final composite material is that, as it migrates to the air/solid interface, the fluorinated chain drags the covalently bonded TiO₂ outward, thus increasing the amount of photoactive TiO₂ on the surface in the final composite material.

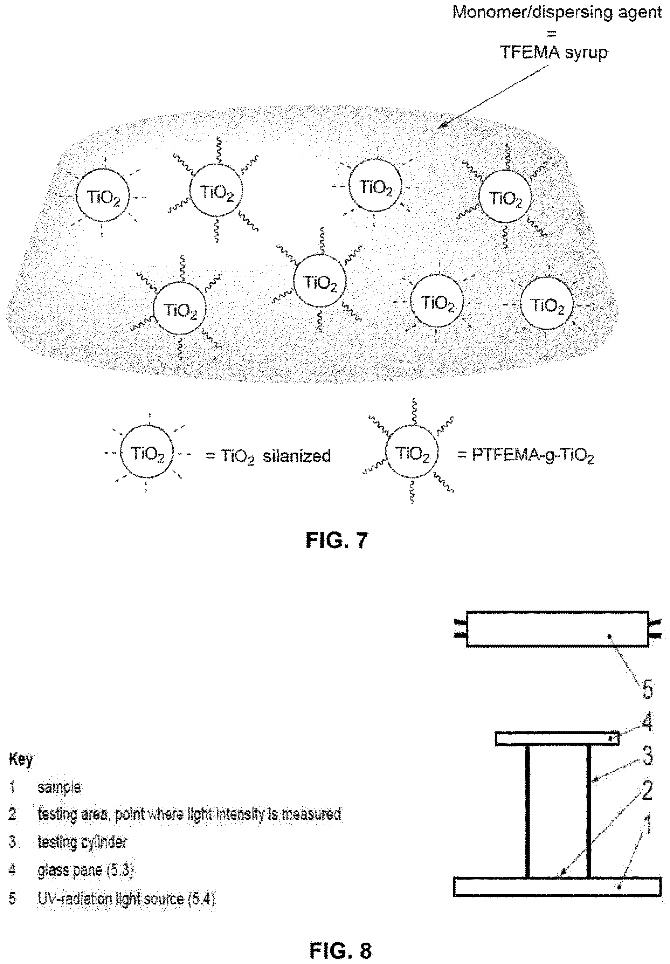

The photocatalytic additive according to the invention can be illustrated as in Fig. 7. Specifically, the photocatalytic additive consists of:
- TFEMA fluorinated monomer, which serves as both a reaction monomer and a dispersing agent;
- fluorinated monomer polymer (PTFEMA = poly 2,2,2-trifluoroethyl methacrylate), which is generated during the partial radical polymerization from the polymerization of monomer units and is dissolved in the same unreacted monomer;
- titanium dioxide *grafted* with the fluorinated polymer PTFEMA (PTFEMA-g-TiO₂), which is generated during the partial radical polymerization thanks to the growth of the fluorinated polymer from the monomeric unit directly bonded to the titanium dioxide.

So, no solvents are used in such a process and it is the reaction monomer itself that acts both as polymerizable unit and as solvent/dispersing agent. The result is the formation of a viscous liquid known as syrup or pre-polymer, in which the TFEMA monomer, the PTFEMA polymer and the titanium dioxide grafted with the fluorinated polymer (PTFEMA-g-TiO₂ ) are present.

The process used to obtain the photocatalytic additive includes the following steps:
- silanization of the TiO₂;
- addition of the silanized TiO₂ into the fluorinated monomer (TFEMA);
- dispersion of the silanized TiO₂ in the fluorinated monomer, for instance by means of ultrasounds, in such a way to obtain a TFEMA/TiO₂ dispersion; and
- heating of the TFEMA/TiO₂ dispersion to a temperature of 65°C-90°C under continuous (moderate) stirring and fluxing (moderate) nitrogen directly into the dispersion.

When the ideal dispersion temperature is reached, the stirring speed is lowered and the nitrogen flow is reduced, then the radical initiator (AIBN, BCHPC, LP, MYPC, BP and others) is added.

The temperature of the system begins to rise due to the exothermic polymerization reaction. When the temperature of 90°C is reached, few additional minutes are waited, the system begins to cool and the stirring speed is increased.

By means of this process, the photocatalytic additive according to the invention is obtained. Such a photocatalytic additive has a dry residue ranging from 15%-60%. The formation of solid polysiloxane residue should not be observed, because the silane must remain anchored to the TiO₂.

Nine additive samples (S1, ..... S9) were prepared for testing according to Table 1 below, which also shows a percentage of dry residue of the additive (after partial conversion).

**Table 1**

| **Additive Sample No.** | **Acrylic monomer** | | **Doped TiO₂** | | **Additive dry residue (after partial conversion)** |
|---|---|---|---|---|---|
| | **% (w/w)** | **Type** | **Pre-silanized** | **% (W/W)** | |
| **S1** | **99.5%** | **TFEMA** | **Yes** | **0.5%** | **13-16%** |
| **S2** | **99%** | **TFEMA** | **Yes** | **1%** | **13-16%** |
| **S3** | **97.5%** | **TFEMA** | **Yes** | **2.5%** | **14-17%** |
| **S4** | **95%** | **TFEMA** | **Yes** | **5%** | **18-21%** |
| **S5** | **90%** | **TFEMA** | **Yes** | **10%** | **27-30%** |
| **S6** | **80%** | **TFEMA** | **Yes** | **20%** | **39-42%** |
| **S7** | **70%** | **TFEMA** | **Yes** | **30%** | **45-48%** |
| **S8** | **70%** | **MMA** | **Yes** | **30%** | **45-48%** |
| **S9** | **70%** | **TFEMA** | **No** | **30%** | **45-48%** |

Additives S1 to S7 comprise TFEMA fluorinated monomer and pre-silanized doped TiO₂, and the percentage of TiO₂ is increasing (S1 = 0.5%; S2 = 1%; ...; S6 = 20%; S7 = 30%).

Additive S8 comprises non-fluorinated monomer methyl methacrylate MMA and pre-silanized doped TiO₂ at 30%.

The S9 additive comprises fluorinated TFEMA monomer and non-silanized doped TiO₂ at 30%.

The nine samples of photocatalytic additives were used in compositions, named DQD Black Matt, comprising 77% of quartz mineral charges and 23% of organic component, consisting mainly of acrylic syrup, comprising a monomer (MMA) and a polymer (PMMA).

Thus, by molding the compositions, a large number of composite material samples were created in which the additives S1-S9 were used at different percentages. The composite material samples obtained with the additive S1 to S4 did not give satisfactory results in terms of photocatalytic activity, as they had a too low percentage of TiO₂. Therefore, the following description refers to the composite material samples obtained with the additives S5 to S9, as shown in Table 2 below.

**Table 2**

| **Composite product sample No.** | **Additive** | | **TiO₂** |
|---|---|---|---|
| | **Additive No.** | **% used in composition (w/w)** | **% in final composite** |
| **5°** | **5** | **3%** | **0.3%** |
| **5b** | **5** | **5%** | **0.5%** |
| **5c** | **5** | **10%** | **1%** |
| **6°** | **6** | **1.5%** | **0.3%** |
| **6b** | **6** | **2.5%** | **0.5%** |
| **6c** | **6** | **5%** | **1%** |
| **7°** | **7** | **1%** | **0.3%** |
| **7b** | **7** | **1.5%** | **0.45%** |
| **7c** | **7** | **3%** | **0.9%** |
| **7d** | **7** | **3%** | **0.9%** |
| **8°** | **8** | **1%** | **0.3%** |
| **8b** | **8** | **1.5%** | **0.45%** |
| **8c** | **8** | **3%** | **0.9%** |
| **9°** | **9** | **1%** | **0.3%** |
| **9b** | **9** | **1.5%** | **0.45%** |
| **9c** | **9** | **3%** | **0.9%** |

Three samples of composite products with DQD Black Matt formulation were prepared with each one of the additives S5 to S9.

The additive S5 (with 10% of pre-silanized TiO₂) was used at 3%, 5%, 10% relative to the total weight of the composition, in such a way to obtain a weight percentage of TiO₂ of 0.3%, 0.5% and 1% in the final composite material (samples 5a, 5b and 5c, respectively);
the S6 additive (with 20% of pre-silanized TiO₂) was used at 1.5%, 2.5% and 5% % relative to the total weight of the composition, in such a way to obtain a weight percentage of TiO₂ of 0.3%, 0.5% and 1% in the final composite material (samples 6a, 6b and 6c, respectively);
the additive S7 (with 30 percent of pre-silanized TiO₂) was used at 1%, 1.5% and 3% relative to the total weight of the composition in such a way to obtain a weight percentage of TiO₂ of 0.3%, 0.45% and 0.9% in the final composite material (samples 7a, 7b and 7c, respectively). In addition, this additive was also used at 3% in a polyester-based formulation to obtain a final composite material with a weight percentage of TiO₂ of 0.9% (sample 7d);
the above also applies to the samples made with additives S8 and S9.

The photocatalytic activity of the composite materials added with the additive according to the invention was measured in the laboratory according to ISO 10678-2010: *"Fine ceramics (advanced ceramics, advanced technical ceramics)* - *Determination of photocatalytic activity of surfaces in an aqueous medium by degradation of methylene blue."*

The scheme of the measurement system used is shown in Fig. 8.

The Methylene Blue (MB) in aqueous solution is degraded upon contact with the potentially photocatalytic surface thanks to the UV radiation of the surface immersed in the solution, resulting in the decolorization of the solution. The amount of MB in the solution is determined at regular time intervals during the UV radiation (20 min) using an X-Rite Ci7600 UV/Vis spectrophotometer. The total duration of the UV radiation is 3 hours. The MB abatement on the same sample without UV radiation (reference) is also measured. The results are used to calculate the specific degradation speed and the photonic efficiency of the tested surface. The stainless steel reactor contains about 35 ml of 10-µM methylene blue solution. The average temperature is about 24°C. The UV-A lamp is a PHILIPS TL-D 18W BLB (λₘₐₓ = 380nm) and is placed at an appropriate distance from the surface of the tested material, in such a way to have a UV radiation intensity of 10 W/m² ; the luminous flux was measured with a UV-A radiometer. Prior to testing, the samples were illuminated for 24h with UV light with irradiance > 10 W/m²; then the samples were conditioned with a 20-µM methylene Blue solution for at least 12h in the dark.

Table 3 illustrates the difference of the methylene blue degradation percentage between the tests with and without light and the photocatalytic parameters P_{MB} (specific photocatalytic activity) and ζ_{MB} (photonic efficiency).

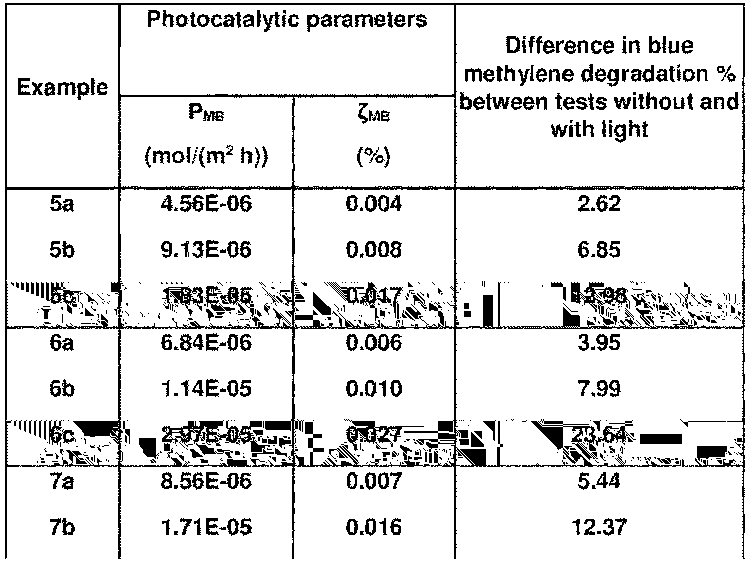

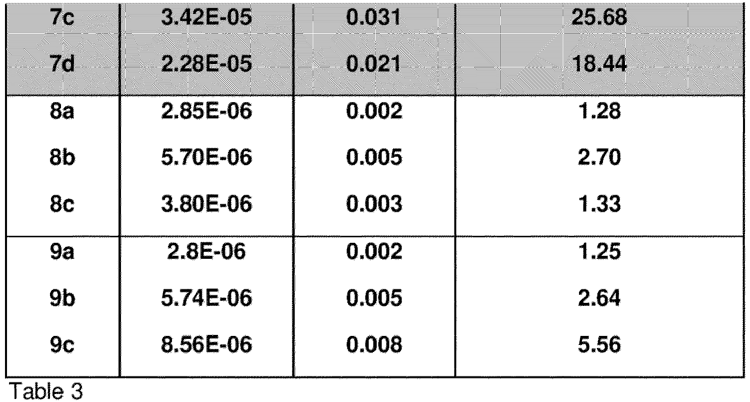

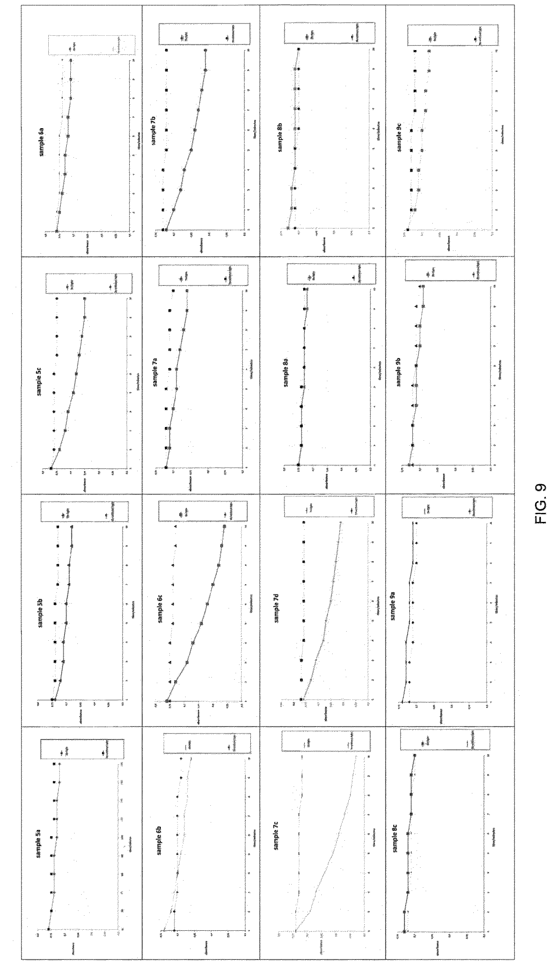

The graph of the methylene blue absorbance (set at 660nm) versus time is shown in Fig. 9.

Table 3 highlights the most interesting results obtained with the composite product samples 5c, 6c and 7c and 7d.

The tests performed on the samples in which the additive formed of the fluorinated monomer TFEMA and the pre-silanized doped titanium dioxide was used (tests with syrup S5, S6 and S7, comprising a weight percentage of TiO₂ of 10%, 20% and 30%, respectively) gave positive results. Using a weight percentage of TiO₂ at 0.45-0.5% in the final composite product (samples 5b, 6b and 7b), the results were acceptable in each case, whereas the tests with 0.9-1% of TiO₂ in the final composite material (samples 5c, 6c, 7c and 7d) were very satisfactory. Using an amount of TiO₂ at 0.3% in the final composite material (samples 5a, 6a, 7a), the tests do not show a clear photoactivity and are mostly ambiguous, the only exception being the tests with sample 7a, which is positive.

Another important aspect is that, with the same % of TiO₂ in the final composite material, better results are obtained by using additives with a higher amount of TiO₂ and the S7 additive (with 30% TiO₂ ) has the best result
(tests with 0.3% of TiO₂: in the final composite product: 7a>6a>5a;
tests with 0.5% of TiO₂: in the final composite product 7b>6b>5b;
tests with 1% of TiO₂: in the final composite product 7c>6c>5c).

In addition, also the test performed in a polyester-based composite material with 0.9% of doped TiO₂ gave positive results.

In order to consolidate the results, tests were performed in samples in which one component of the additive was changed at a time:
The additive S8 is formed of methyl methacrylate MMA and silanized doped titanium dioxide at 30%;
the additive S9 is formed of fluorinated TFEMA monomer and non-silanized doped titanium dioxide at 30%.

The results of the photoactivity tests show a marked deterioration in the photocatalytic properties with the same percentage of TiO₂ in the final composite material. The tests performed with the samples (8a, 8b and 8c) containing the additive S8 comprising MMA + doped TiO₂ all gave negative results.

Among the tests performed with the samples (9a, 9b 9c) containing the additive S9 comprising TFEMA and non-silanized doped TiO₂, the first two samples 9a and 9b showed negative results and the last sample 9c showed an acceptable result in the case of 0.9% of TiO2. In any case, the tests performed on samples (7a, 7b, 7c) obtained with the additive comprising TFEMA and silanized doped TiO₂ showed significantly better results.

In view of the above, it can be concluded that the use of the photocatalytic additive according to the invention makes it possible to obtain a photocatalytic surface in composite materials based on acrylic syrup and mineral charges according to ISO 10678-2010.

The tests show that, in order to achieve an acceptable photoactivity, the minimum amount of TiO₂ in the final composite material must be greater than 0.3%. In order to obtain an optimal trade-off between product efficiency and cost, the weight percentage of TiO₂ in the final composite product should be comprised in the range of 0.3-1%.

With the purpose to confirm these results, the ISO 10678:2010 test was also performed by the external certified laboratory "Centro Ceramico" on a sink with DQD Black Matt formulation having 0.5% of doped TiO₂ using the additive S6. Unlike the tests according to ISO 10678:2010 performed in the in-house laboratory, the following equipment was used: a UV/Vis V670 spectrophotometer (Jasco, USA); a glass reactor containing about 80 ml of 10µM methylene blue solution; a Philips PL-S 9W/08/2P UV-A lamp, NL with λₘₐₓ = 370 nm; an LP 471 UV-A probe, connected to a DELTA OHM HD 2102.2 radiometer to measure the radiation on the sample surface.

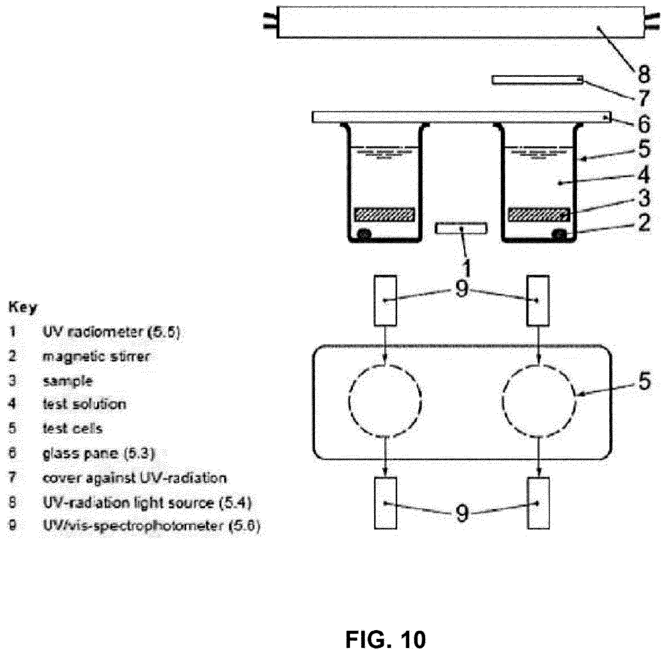

The diagram of the measurement system used by an external laboratory can be represented as in Fig. 10.

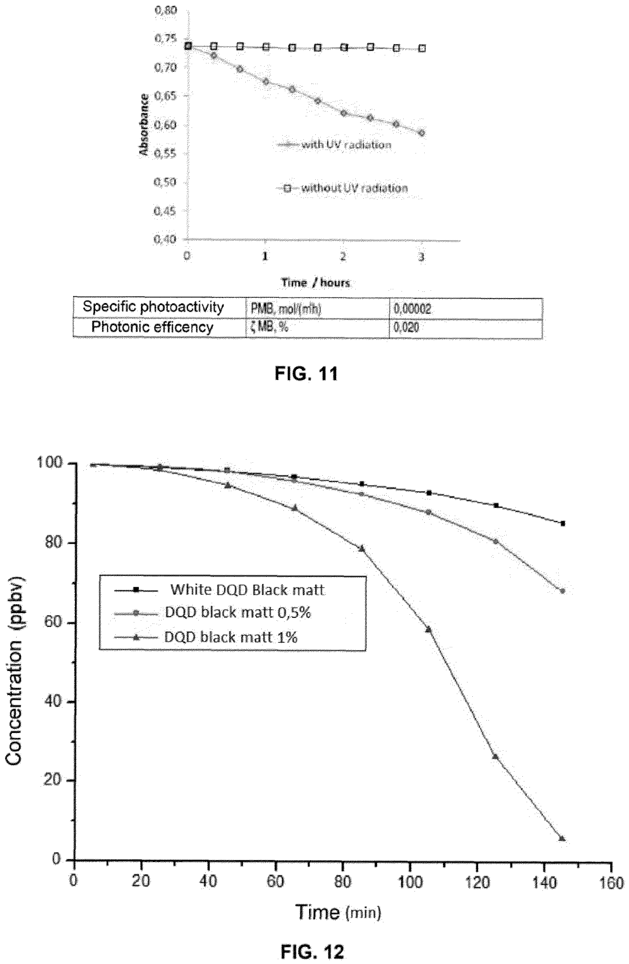

The graph of the methylene blue absorbance (set at 665nm) versus time is shown in Fig. 11.

Also from this result, it can be said that the tested sample has a surface photocatalytic activity according to ISO 10678:2010.

The abatement of pollutants in gaseous phase was chosen to measure the photocatalytic activity with both a UV and a visible light source. The tests were performed by the external laboratory "CE.RI.COL.". Thus, tests were performed to measure the photocatalytic efficiency through the abatement of pollutants in gaseous phase (nitrogen oxide NOx) using UV light and visible light, on the following samples:
- White (reference): DQD Matt black without TiO₂;
- Sample 1: DQD Black Matt added with 0.5% of doped TiO₂ (additive S6);
- Sample 2: Matt black DQD with 1% of doped TiO₂ (additive S6).

The tests measured the photocatalytic efficiency of the samples and the results are expressed as the percentage of residual nitrogen oxide (NOx) concentration. The analysis with UV light was conducted with the Osram Ultravitalux lamp (Power 300 W), using the following analysis conditions:
irradiance: 50 W/m²;
temperature: 23°C ± 2°C;
relative humidity: 60% ± 12%;
initial NO concentration: 200 ± 10 ppbv.

The analysis was conducted in discontinuous mode, performing 5-minute samplings, interspersed with 15-minute recirculation times, for a total analysis time of 2.5 hours.

The analysis with visible light was conducted with a Blue LED plate (Power 14 W) using the following analysis conditions:
irradiance: 58 W/m²;
temperature: 24°C ± 1°C;
relative humidity: 57% ± 7%;
initial NO concentration: 200 ± 10 ppbv.

The analysis was conducted in discontinuous mode, performing 5-minute samplings, interspersed with 90-minute recirculation times, for a total analysis time of 11.5 hours.

The graph of the percentage residual concentration versus time, using UV light, is shown in Fig. 12.

The graph shows a remarkable photocatalytic activity of NOx degradation in gaseous phase, especially in sample 2 (DQD Black Matt with 1% of doped TiO₂ (additive S6)), which reaches a percentage residual concentration well below 10% in less than 2.5 hours. In addition, also the test with sample 1 (DQD Black Matt with 0.5% of doped TiO₂ (additive S6)) shows a remarkable photocatalytic activity, reaching a residual percentage of about 70%; for a comparison, the white (material without TiO₂ ) reaches about 90% of residual NOx concentration.

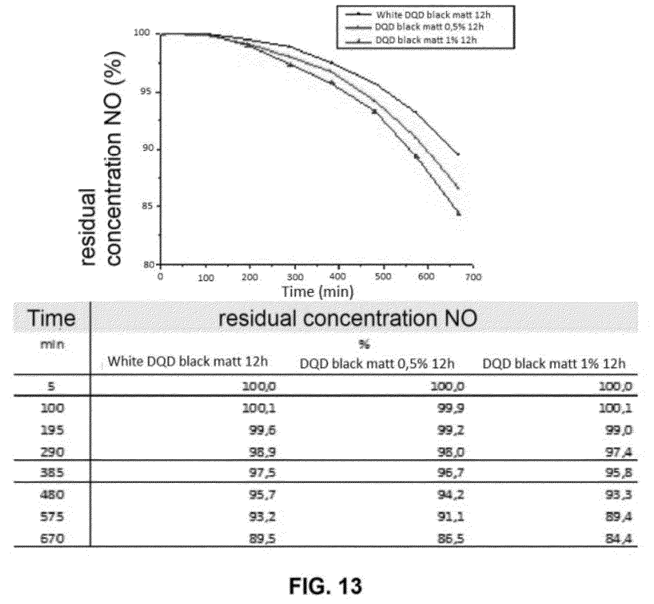

The graph of the percentage residual concentration versus time, using visible light, along with the table with the test data, are shown in Fig. 13.

The test shows a similar trend to the one seen in the test with UV light, although with lower results. In fact, a moderate photocatalytic activity of NOx degradation in the gaseous phase is observed, especially in sample 2, which reaches a residual percentage concentration of 84.4% in 670 minutes. For sample 1, the residual concentration at the end of the test is 86.5%; on the other hand, the result for the white is 89.5%.

In order to measure the antibacterial activity of the materials added with the photocatalytic additive of the present invention, the bactericidal power was tested by the external laboratory "Gruppo C.S.A - Centro di Ricerca" (surface test-microorganism resistance). The samples were activated with a UV lamp for 8 hours and prepared according to ISO 22196:2011 *"Measurement of antibacterial activity of plastics and other non-porous surfaces".* The microbiological analysis was performed within 24 hours from the date of receipt of the sample. The parameters tested were *Escherichia coli* beta glucuronidase positive; *Salmonellae; S.aureus and other species; Listeria monocytogenes; Pseudomonas aeruginosa; Legionella sp.; Enterococci.* The tests were performed on the following samples:
- DQD Black Matt added with 0.5% of doped TiO₂ (additive S6);
- DQD Black Matt added with 1% of doped TiO₂ (additive S6).

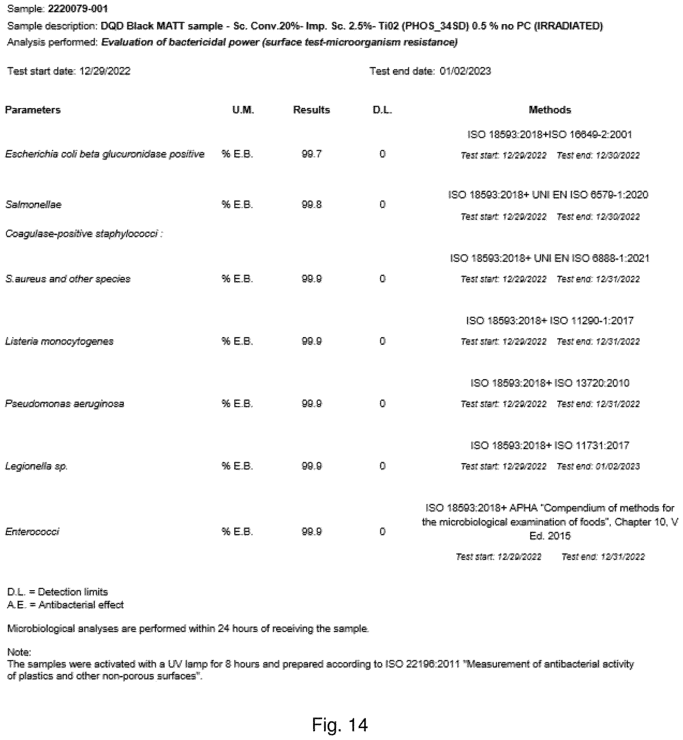

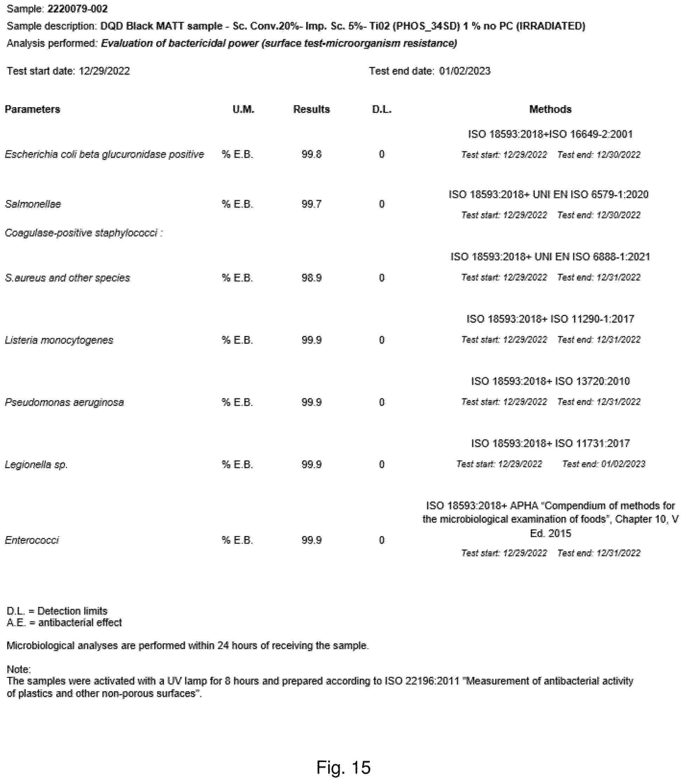

The result of the tests is shown in Figs. 14 and 15.

The DQD Black Matt sample with 0.5% of doped TiO₂ (additive S6) shows a percentage antibacterial effect of 99.7% vs. *Escherichia coli* beta glucuronidase positive; 99.8% vs. *Salmonellae;* 99.9% vs. *S.aureus and other species; Listeria monocytogenes; Pseudomonas aeruginosa; Legionella sp.; Enterococci.*

The DQD Black Matt sample with 1% of doped TiO₂ (additive S6) shows a percentage antibacterial effect of 99.8% vs. beta glucuronidase-positive *Escherichia coli;* 99.7% vs. *Salmonellae;* 98.9% vs. *S.aureus and other species;* 99.9% vs. *Listeria monocytogenes, Pseudomonas aeruginosa, Legionella sp., Enterococci.*

In both cases, therefore, a significant antibacterial activity is observed in the materials added with the photocatalytic additive according to the invention.

Based on the results of the tests, it can be inferred that the composition of the final product should comprise the photocatalytic additive according to the invention in a weight percentage of 1%-6% with respect to the total weight of the composition; preferably, the composition should comprise said photocatalytic additive in a weight percentage of 1.5%-4.0%, thus achieving an amount of TiO₂ in the material that is comprised between 0.2% and 1.8%, preferably between 0.3% and 1.2%.

It is worth pointing out that the amount of TiO₂ contained in the composition is very small (in fact, it is not a surface coating), but is sufficient to observe surface photocatalytic properties.

Scanning Electron Microscopy (SEM) tests with EDS microanalysis were performed. As it is well known, the SEM is the main analytical technique for a rapid microstructural characterization of the materials; in addition, the EDS microanalysis allows elemental information to be obtained. The SEM/EDS combination made it possible to acquire morphological images that can be correlated with changes in atomic number and to identify the elements contained in the material; the X-ray fluorescence spectrometry provides the simultaneous determination of all elements contained in very small surfaces.

The analysis was conducted in two areas of the final composite material: on the surface (*show face* of the sink) and on the section (inner thickness of the sink). The sample examined microscopically is sample 7c with 0.9% of TiO₂, obtained with additive S7 (TFEMA with 30% of pre-silanized doped TiO₂).

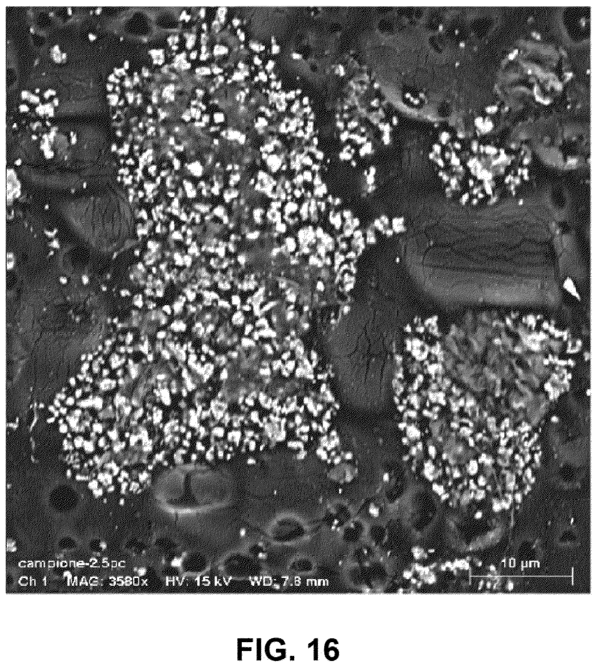

Fig. 16 illustrates the SEM image of the *show face* of the composite material.

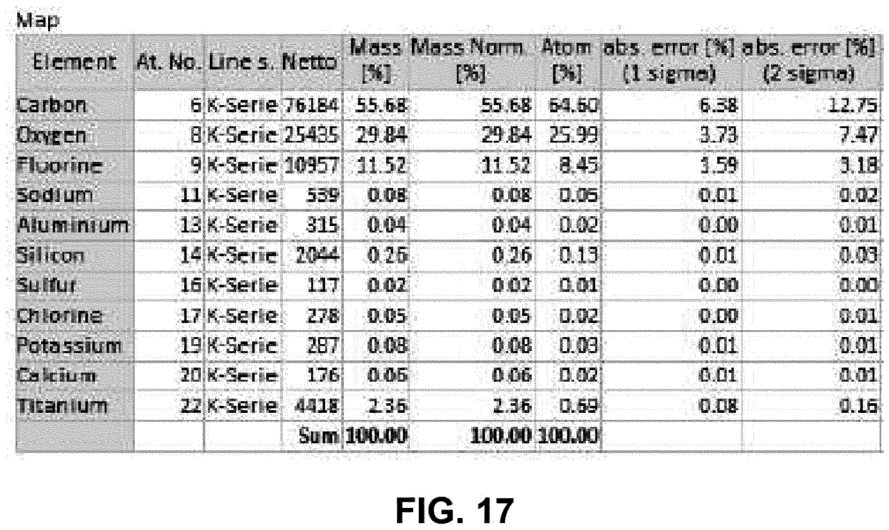

Fig. 17 shows a list of elements identified by the X-ray microanalysis and present on the *show face of* the composite material. EDS elemental microanalysis allows for quantifying the presence of both titanium and fluorine. The elements Ti and F are present in a high content.
For titanium→ normal mass 2.36%; atomic mass 0.69%;
For fluorine→ normal mass 11.52%; atomic mass 8.45%.

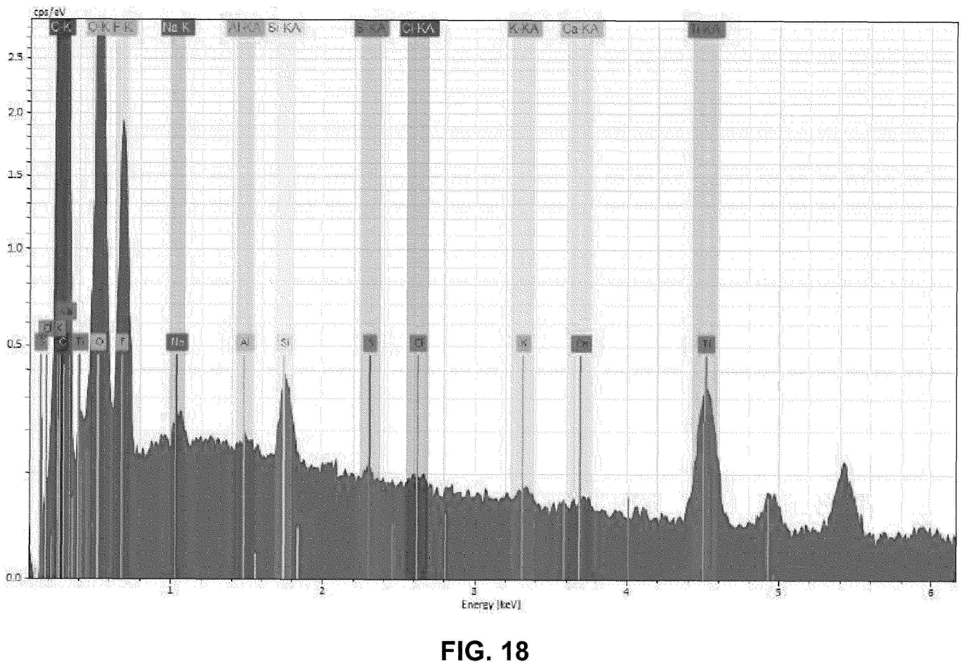

Fig. 18 illustrates the EDS spectrum obtained on the *show face*: the y-axis represents the number of counts and the x-axis represents the x-ray energy. The position of the peaks allows for identifying the elements, and the peak height allows for quantifying the concentration of each element in the sample. In particular, the peaks corresponding to the K-α of Ti (at about 4.5 keV) and of F (at about 0.7 keV) are clearly visible.

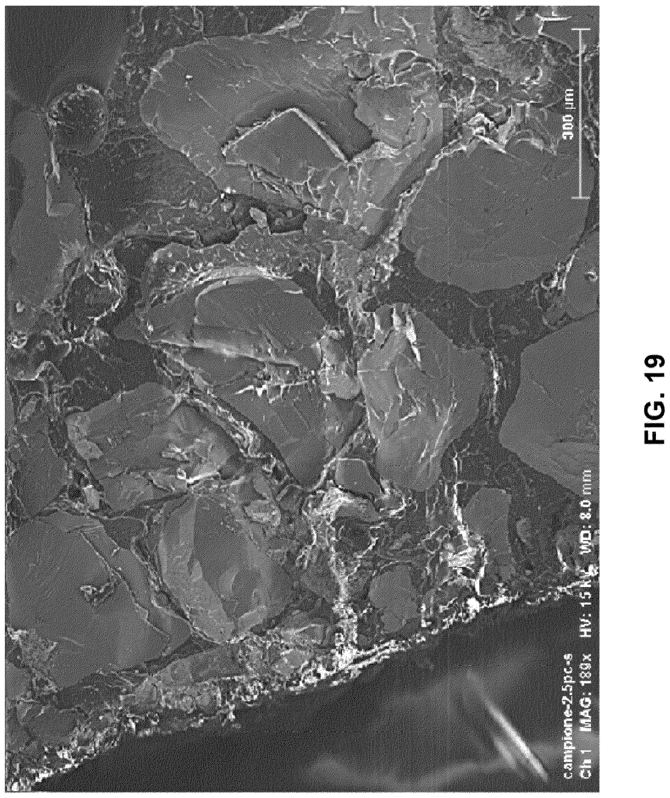

Fig. 19 shows the SEM image of the section of the composite material.

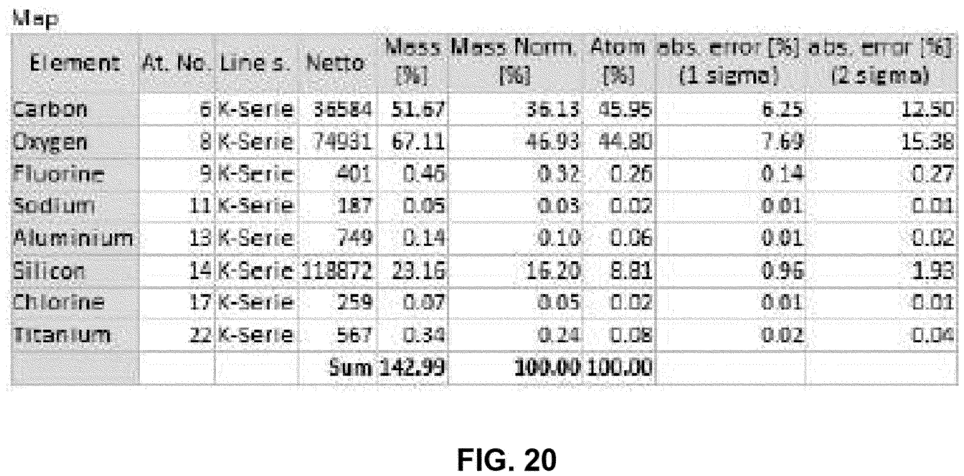

Fig. 20 shows a list of elements identified by the X-ray microanalysis and present in the composite material section. The EDS elemental microanalysis quantifies a minimal presence of the elements Ti and F, which are present in much smaller amounts than in the *show face.*
For titanium→ normal mass 0.24%; atomic mass 0.08%;
For fluorine→normal mass 0.32%; atomic mass 0.26%.

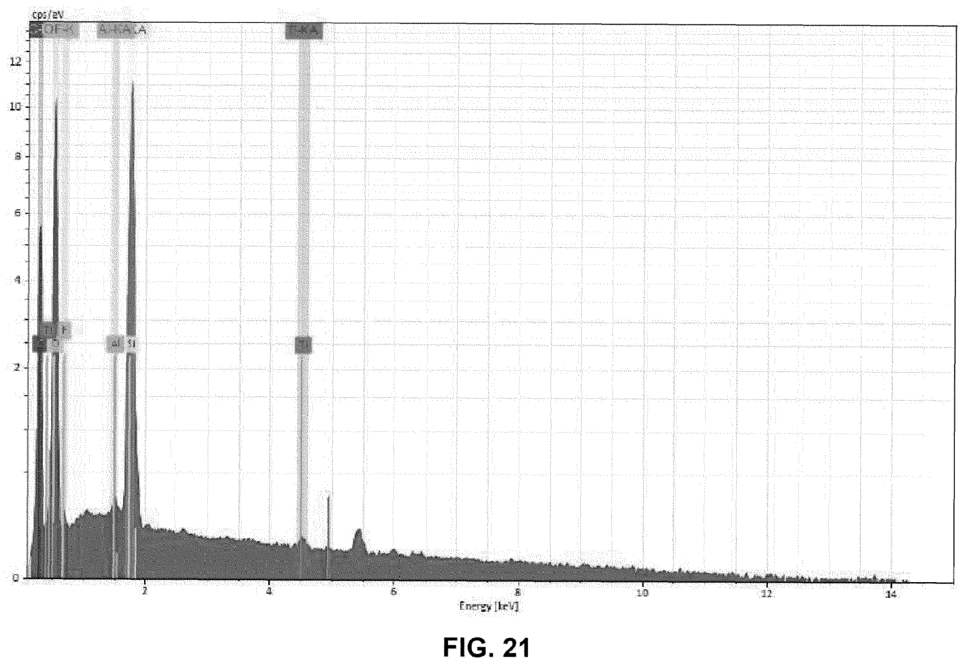

Fig. 21 shows the EDS spectrum obtained in the composite material section. In particular, the peaks corresponding to the K-α of Ti (at about 4.5 keV) and of F (at about 0.7 keV) are much less pronounced than those observed on the *show face.*

From these analyses, it can be seen that the elements Ti and F are more present on the surface of the composite material, whereas they are significantly less in the section, and therefore it can be concluded that the titanium dioxide migration is effectively achieved thanks to the formation of the fluorinated syrup with silanized doped titanium dioxide.

Variations and equivalent changes may be made to the present embodiment of the invention, within the scope of an expert of the field, which are nevertheless within the scope of the invention as expressed by the appended claims.

## Claims

1. Photocatalytic additive for the manufacturing of products made of acrylic and polyester composite for kitchen and bathroom furnishings, comprising:
- a fluorinated component comprising a methacrylic monomer with alkyl group having fluorine atoms; and
- a photocatalytic component comprising titanium dioxide (TiO₂);
**characterized in that**
the titanium dioxide (TiO₂) of the photocatalytic component is a doped titanium dioxide (TiO₂).

2. The photocatalytic additive according to claim 1, wherein the doped titanium dioxide (TiO₂) is a titanium dioxide that is doped with 1%-10% of a transition metal with electronegativity comprised between 1.4 and 2.

3. The photocatalytic additive according to claim 2, wherein the transition metal is Manganese in a percentage of 1%-10%, or Silver in a percentage of 2%.

4. The photocatalytic additive according to any one of the preceding claims, wherein the doped titanium dioxide (TiO₂) is pretreated with a silanization process.

5. The photocatalytic additive according to claim 4, wherein the doped titanium dioxide (TiO₂) is pretreated with 3-methacryloxypropyltrimethoxysilane (MAPTMS).

6. The photocatalytic additive according to claim 4 or 5, comprising a radical initiator, comprising a peroxide or azo compound.

7. The photocatalytic additive according to any one of the preceding claims, wherein the doped titanium dioxide (TiO₂) is nanometer titanium dioxide in anatase crystalline form.

8. The photocatalytic additive according to any one of the preceding claims, wherein said acrylic monomer comprises a methacrylic acid ester.

9. The photocatalytic additive according to claim 8, wherein said fluorinated component comprises one or more esters of acrylic or methacrylic acid containing fluorine atoms, such as:
2,2,2-trifluoroethyl methacrylate (TFEMA),
2,2,2-trifluoroethyl acrylate,
2,2,3,4,4-Hexafluorobutyl acrylate,
2,2,3,3,4,5,5,6,6,7,7-Dodecafluoroepthyl methacrylate,
Hexafluoroisopropyl methacrylate,
1H,1H,5H-Octafluoropentyl methacrylate.

10. The photocatalytic additive according to any one of the preceding claims, comprising doped titanium dioxide in a weight percentage greater than 15% relative to the total weight of the additive.

11. Production process of a photocatalytic additive according to any one of the preceding claims, comprising the steps of:
- addition of doped titanium dioxide (TiO₂) to an acrylic monomer with alkyl group having fluorine atoms;
- dispersion of the doped titanium dioxide (TiO₂) in the fluorinated monomer so as to obtain a dispersion of fluorinated monomer and doped titanium dioxide.

12. The process according to claim 11, wherein, before the step of addition of doped titanium dioxide (TiO₂) to an acrylic monomer with alkyl group having fluorine atoms, the process comprises a step of doping of a titanium dioxide with 1%-10% of a transition metal with electronegativity comprised between 1.4 and 2.

13. The process according to claim 11 or 12, comprising the steps of
- heating of the dispersion to a temperature range of 65°C - 90°C,
- addition of a radical initiator, and
- cooling of the dispersion.

14. Composition for the manufacturing of kitchen and bathroom furnishing products, comprising:
- mineral charges,
- an acrylic syrup or polyester resin, and
- a photocatalytic additive according to any one of claims 1 to 9.

15. The composition according to claim 14, comprising said
photocatalytic additive in a weight percentage comprised between 1% and 6% relative to the total weight of the composition.
